# EUROPEAN PATENT SPECIFICATION

(11) **EP 1 149 241 B1**
(45) Date of publication and mention of the grant of the patent: **28.07.2004**
(21) Application number: 00900972.1
(22) Date of filing: 06.01.2000
(51) Int. Cl.: F03B 3/14, F03D 7/06

(54) **TURBINE DRIVEN WITH A FLUID MEDIUM**
DURCH EIN FLUIDES MEDIUM BETRIEBENE TURBINE
TURBINE ENTRAINEE PAR UN MILIEU FLUIDE

(30) Priority: 06.01.1999 NO 990039; 03.09.1999 NO 994310
(43) Date of publication of application: 31.10.2001
(73) Proprietor: Water Power Industries AS, 1390 Vollen (NO)
(72) Inventor: KAARE, Finn, Jr., 1390 Vollen (NO); EVENSEN, Even, N-1390 Vollen (NO)
(74) Representative: Bjerre, Nils B.J.
(86) International application number: PCT/NO2000/000002
(87) International publication number: WO 2000/040859

(56) References cited:
- WO-A1-94/29590
- DE-A1- 19 544 400
- DK-B- 164 294
- US-A- 4 368 392

## Description

### Technical background

This invention relates to a turbine with adjustable foils, driven by a fluid medium, and a method of producing electric energy by the use thereof (eg US-A-4 368 392).

### Background of the invention

For a long time it has been used different types of equipment to utilise the power in flowing mediums. Windturbines with a horizontal rotating shaft have, in the recent decades, been developed and deployed in vast numbers to generate electric energy. They are, however, encumbered with a number of disadvantages, i.e. noise, optical environmental pollution, high costs by production and deployment. Most windturbines can only utilise a small amount of the total available wind power energy.

It has also been developed windturbines with a vertical shaft. These have a number of advantages over those mentioned above such as less noise due to lower peripheral speed, lower mounting structures, and hence reduced installation and operating costs. They are not dependent of the wind direction. It has been shown that it is necessary to adjust the wings angel of attack to the wind, depending upon the medium's strength and speed. It is well known different ways of adjusting the angel of attack, but non that seek to adjust it individually and positively.

US 4.052.134 discloses a wind turbine having a vertical rotating shaft which is provided with wings having an instrument that seek to adjust the foils back to a stabile position in line with the turbines rotating track.
NO 302.590 describe a windturbine with vertical shaft, which has an instrument that seeks to counteract the foils tendency to align themselves with the winds apparent direction.
US 4.168.439 describe a huge windturbine, with a complicated system of electric motors, gears and instrumentation, for controlling very large wings, primarily seeking to start and stop the contraption.
DK 164.294 describe a method of modifying windturbine wings, by attaching flexible torpedo shaped bodies at the wings free end.
US 2.950.765 and US 2.250.772 describe turbines with vertical shaft and controlled foils. The foils are all guided simultaneously by rods that push or pull the foils to a set position, guided by the dislocation of an eccentric mounted turning wheel. The purpose of these turbines is to achieve propulsion of ships.

Turbines for converting power from flowing water belong to the prior art. Most turbines have in common that the water flow must be directed to the power generating area of the turbine within limitations in speed, direction and amount.
It is self evident that the generated electric energy is directly proportional with the speed of the flowing medium, i.e. an increase in the water speed at the power generating areas of the turbine will increase the produced amount of electricity.

It is still of great interest to utilise the power in slow moving fluids in the production of electric energy. This invention makes this possible in a simple and inexpensive way.

### Summary of the invention

The invention thus provides a turbine driven by a flowing medium to generate electricity, comprising of a number of foils of a suitable length, width and thickness, and having a hydrodynamic shape according to specifications in the NACA standard. Each foil is attached with the upper part of its shaft to a rotational, discoidal supporting structure which are connected to the turbines main shaft and the longitual shaft of the foils are mainly parallel to the main shaft, wherein each foil is equipped with a motor that is used for individually pivoting the foil around its longitual shaft, independently of each of the other foils, to > obtain that the main surface of each foil will be in a desired angel of attack relative and absolute to the direction of the flowing medium.

The turbine is suitable for the production of electric energy from flowing water of relatively low speed.

### Brief description of the drawings

Fig. 1 is a schematic perspective drawing showing a four foiled, vertical shaft turbine, according to the invention.
Fig. 2 is a horizontal section view showing a discoidal supporting structure with four foils attached.
Fig. 3 is a vertical section view through a foil.
Fig. 4 is a drawing showing suggested hydrodynamic bodies at the free end of the foil.

### Detailed description of the invention.

The purpose of the invention is to achieve a turbine that facilitate an optimum utilisation of the dynamic forces in a medium that moves with low speed from different directions.
The term "flowing medium" refers to all fluid streams, such as naturally moving water and gases. Moving water comprises water in creeks and rivers, water conveyed to a turbine through pipes, in ducts and similar vessels, and waves of all kinds found in lakes and oceans.
The term "foil" refers to any wing shaped profile with two congruent, curved, elongated outer surface areas that are connected along a connecting axis, in the direction of speed is rounded and in the aft part are diminishing into a sharp edge.
Thus, the foils will have a hydrodynamic shape. A number of foils of different shapes are presented in details in the well renown standards from National Advisory Committee on Aeronautics (NACA).

A number of foil shapes can be used and as a preferred shape can be given the foil NACA 63.015.

Every foil has a vertical excentric shaft in the longitual direction. If the turbine is of the horizontal type the shaft will be in an according horizontal direction. A turbine of the present invention will be equipped with 2 to 10 foils, preferably between 4 and 8, most preferred 5 foils that are connected to the underside of a rotating discoidal structure in such a way that the foil will be in a approximate vertical position. All foils are fixed to the supporting structure spaced in approximate equal distances from each other and at an approximate equal distance from the centre of the rotating structure and approximately parallel to the rotating shaft.

The size of the foils is not particularly restricted as long as they can fulfil the purpose. The size will depend on the flowing medium's density and speed. Hence, foils for use in water can have a vertical length from 1m to 100 m, preferably between 5 m and 20 m, most preferably about 10 m. The width of the foils, or horizontal cut, is typically from 0,5 to 5 m, preferably from 0,5 to 2 m, most preferably about 1m. The thickness of the foil is typically between 0,05 and 1 m, but will depend on the chosen type of foil.

The foils can be made of any suitable material, preferably chosen from the group comprising steel, aluminium and polymer composites such as fibre reinforced unsaturated polyester resin (GUP). The dimensional criteria are given by the selection of the material.

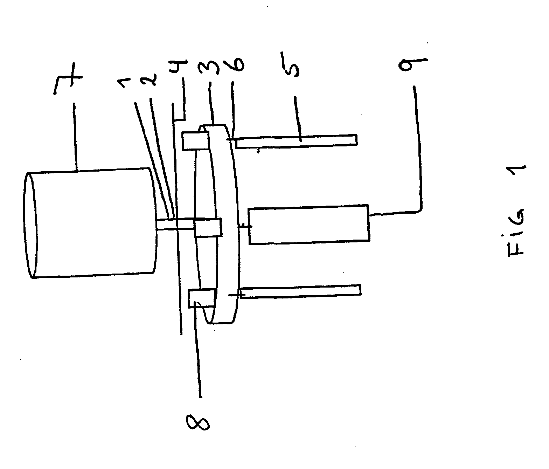

With reference to the figures, Fig. 1 illustrates a turbine with a vertical shaft 1 connected to a rotating shaft 2 to which it is connected a discoidal supporting structure 3. On the supporting structure is attached a number of foils 5. Every foil has a longitual shaft 6 that permit pivoting of the foil. The upper end of the shaft is connected to the supporting structure 3. Each of the foils 5 is connected to a rotating motor 8, more preferably a step motor. With the motor 8 the foil can pivot around its longitual shaft 6, which is mainly aligned with the turbine shaft 2, in such a way that the foil can be turned into any position relevant to the fluid medium. The yield of the foil 5 will to a large extent dependent upon the turbulence created around the free ends 9 of the foil 5. The invention utilises this knowledge by applying either flat shaped objects 15 or torpedo shaped objects 10 being of a size from 1 to 50 times the foils 5 square area, more preferred 2 times the foils 5 square area; or carefully shaped elliptical bodies 14, which shape is defined as ½ of the foil profile and which size is in the region of 1 to 50 times the width of the foil 5, more preferably to be of the same size as the foil 5, applied to the foil 5 free end 9. The supporting structure consists of a discoidal object 3, and the foils 5 are put in a position near the plate's periphery. During operation the foils 5 will therefore have a centric circular track 12 around the turbine shaft 2. This circular track 12 is defining the outer diameter of the turbine. In the main structure 4 of the turbine is a device, which transform the rotating motion of the shaft to a dynamo 7, enabling production of electric energy.

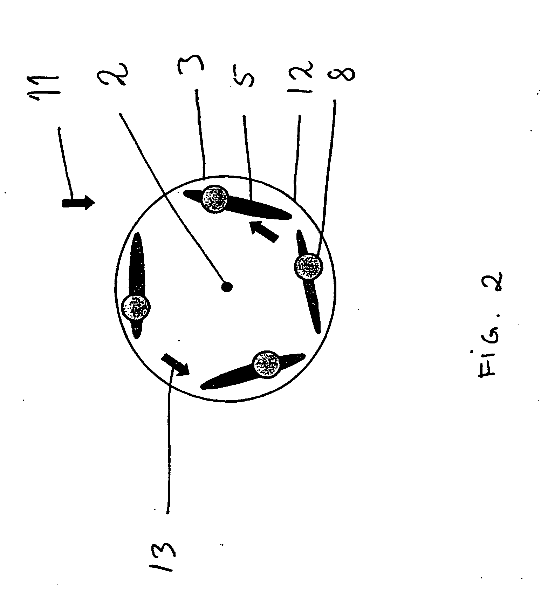

Fig. 2 is a drawing showing the turbine with a turbine shaft 2 and four foils 5 attached to the supporting structure 3, consisting of a discoidal plate, at which the foils 5 is pivotable connected near the periphery of the plate, which gives the foils 5 a concentric track 12 around the turbine shaft 2. It is indicated how a motor 8 is placed over the foils 5. A number of arrows indicate the direction of the flow 11 and the rotation of the turbine 13.

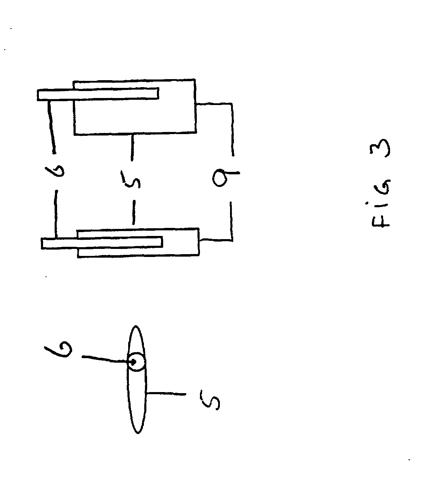

Fig. 3 is a drawing through the foil 5 in the centreline of the foil width. It is indicated how the longitual shaft 6 is incorporated into the foil 5, the shape of the foil 5 including the free end 9 of the foil 5.

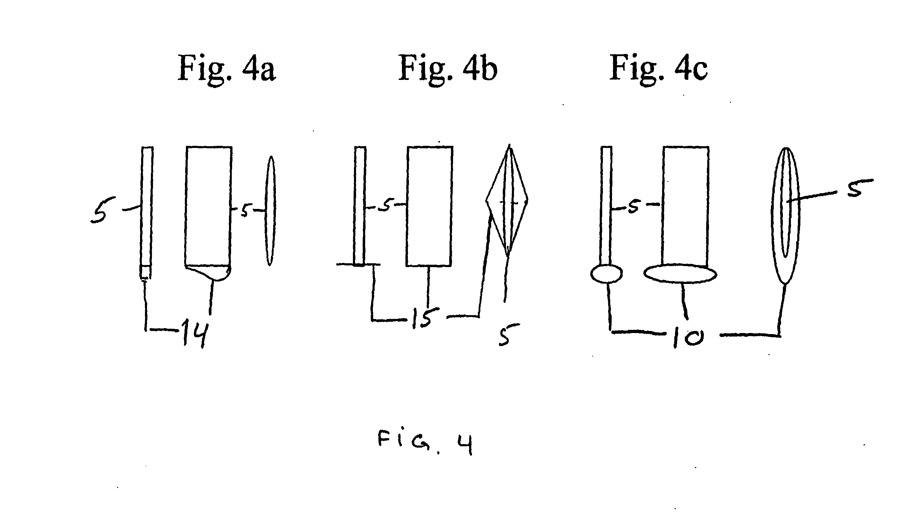

Fig. 4 is a drawing of the foil 5 and of alternative shapes of the free end 9 of the foil 5.

Fig. 4 a. is a drawing of the foil 5 and a carefully shaped elliptical body 14, which shape is defined as ½ of the foil profile.

Fig.4 b. is a drawing of the foil 5 and of a flat-shaped object 15. The object is of a parallelogram shape 15 with the diagonal as the foil 5 centre. The parallelogram will exceed the foils 5 dimensions equally on both sides of the foil 5. The thickness of the parallelogram 15 is not critical and therefore not indicated.

Fig. 4 c. is a drawing of the foil 5 and of a torpedo shaped object 10, which will exceed the foil 5 dimensions on all sides. Torpedo shaped object 10 has previously not been applied on vertically erected foil 5.

This invention utilises the same type of motor 8 for each of the foils 5. The motor may be a step motor, preferably a step motor of the type hybrid step, plate step or ordinary step motor.

Each foil 5 is provided with the same controlling system enabling a full control of each foil 5 pivotable position. The motor 8 gives therefor a possibility of controlling the foil 5 relative and absolute angel to the flowing medium. The foils 5 are moving in a circular track, consequently the foil's position, relative and absolute, must be adjusted in a dynamic way.

With reference to fig. 2, the rotational cyclus of the turbine will now be described. When the foils 5 is put in an basically vertical position in a streaming fluid, they will, due to the pivotable attachment, tend to align themselves in the least resistance way, i.e. in line with the flowing medium. To obtain a rotation of the turbine and hence a production of electricity, each foil 5, attached to its respective motor 8 on the discoidal supporting structure 3, will be turned into a suitable relative and absolute angel to the flow. The motor 8 will turn the foil in an angel between 5° and 50°. This will therefore excerpt a force on the surface of the foils 5 and set the turbine in motion. The rotational motion will cause the foils 5 to have a changed angel of attack to the flow and the motor 8 will be governed to turn the foils 5 into an angel of attack as indicated above. The accuracy of the foil's 5 angel of attack to the flow is dependent upon the motor's 8 ability to find and keep its position. Adequate adjustments will be made during the circular track of the foil 5. Therefore, the foil 5 will generate a force during approximately the total circular track, which will give an optimum production of power.

It is preferable that the blunt end of the foil 5 is the leading edge through the flow. In reference to fig. 2, and as indicated by arrows showing the turning 16 and flowing 11 motions, the blunt edge of the foil 5 will be the leading edge. The position of the foils will be the same irrespectively of the nature of the fluid medium.

Since the pivotable position of the foils 5 is individually adjustable by the motors 8 the turbine can be started and stopped regardless the speed of the flowing medium without causing a breakdown of the contraption.

The pivotable motion of the foils 5 with its governing system enables a position of the foils 5 that will keep the turbine still, enabling repair and maintenance work.

The foils 5 will bring the discoidal supporting structure 13 to rotate with limited speed, preferably between 5 and 60 Rpm, more preferred 5 to 20. The rotating speed can be controlled by the foil's 5 position in the flow.

The amount of force generated by the turbine is dependent of the height, width and length of the foils 5 together with the flow rate. Low speed foils 5 are more convex and have a larger surface area than high speed ones. The surface should be prepared to encourage laminar flow of the medium.

Maximum yield from the turbine will best be achieved by utilising a governing program, preferably an electronic one, to pivot the foils into the most favourably position, taking into account the best combination of speed and force.

The turbulens from the free end 9 of the foil 5 will give a reduction in the theoretical yield of the turbine.

The yield from the turbine 2 is not dependent upon the direction of the flow as long as this is not deviating too much from the perpendicular on the main shaft of the turbine 2.

This invention is described, as being in a vertical position in a water flow, but will work equally well in a horizontal one, and in other flows such as wind etc.

The dynamo 7 is always stationary. The turbine can have the shaft in a vertical position, but can also have the shaft in a horizontal position. If the turbine is to be used in water it will be attached to an anchored and floating unit or to a unit fixed to the sea bottom. The shaft of the turbine can be mounted to all sides of the unit. If the turbine is to be used in the air, it will be mounted on a foundation, pedestal or equivalent.

A turbine, according to the invention, is suitable for installation on floating or submersed units anchored to the riverbed, seabed or shores. Suitable floating elements are pontoons, floats, rafts, boats, barges, rigs, "semi-submersibles", "tension legs platforms" or purpose built constructions. The turbine can also be mounted to fixed construction, such as jackets, GBS, sub sea structures, executed in, concrete, GUP, steel or other metal. These fixed structures may also be purpose build.

The construction of the turbine enables small or large units. The turbine can be installed as a single standing unit or in a multiple construction, in a patter encouraging optimum utilisation of the available flow. The installations can be built and situated without major impact on the environment. The turbine can be installed in the ocean, below the surface of the sea, and hence give no visual impression or hamper sea transportation. Likewise installation methods applies to rivers and seas.

## Claims

1. Turbine driven by a flowing medium to generate electricity, comprising of a number of foils (5) of a suitable length, width and thickness, having a hydrodynamic shape, each foil (5) is attached with the upper part of its shaft (6) to a rotational, discoidal supporting structure (3) which are connected to the turbines main shaft (2) and the longitual shaft (6) of the foils (5) are mainly parallel to the main shaft (2), **characterised in that** each foil (5) is equipped with a step motor (8) that is used for individually pivoting the foil (5) around its longitual shaft (6), independently of each of the other foils (5), to obtain that the main surface of each foil (5) will be in a desired angel of attack relative and absolute to the direction of the flowing medium (11).

2. Turbine according to claim 1 **characterised by** that the step motor (8) is of the type hybrid step, plate step or ordinary step motor.

3. Turbine according to any of claims 1 to 2, **characterised by** that the free end (9) of each foil is equipped with a flat parallelogram-shaped object (15) being in a perpendicular position to the longitudinal axis of the foil (5).

4. Turbine according to any of claims 1 to 2, **characterised by** that the free end (9) of each foil is equipped with a torpedo-shaped object (10) in a perpendicular position to the longitudinal axis of the foil (5).

5. Turbine according to any of claims 1 to 2, **characterised by that the free** end (9) of each foil is equipped with an elliptic body (14) in a perpendicular position to the longitudinal axis of the foil (5).

6. Turbine according to any of claims 1 to 5, **characterised by** that the step motor (8) is made to engage each foil (5) individually and with individual power, and to be controlled by a central unit.

7. Turbine according to any of claims 1 to 6 **characterised in that** the foil (5) and the step motors (8) are mounted on a discoidal supporting structure.

8. Turbine according to any of claims 1 to 7 **characterised by** that the rotating shaft is in a mainly vertical position.

9. Turbine according to any of claims 1 to 7 **characterised by** that the rotating shaft is in a mainly horizontal position.

10. Turbine according to any of claims 1 to 9 **characterised in that** the flowing medium is water.

## Patentansprüche

1. Durch ein strömendes Medium angetriebene Turbine zur Erzeugung von Elektrizität, umfassend eine Anzahl von Blattprofilen (5) einer geeigneten Länge, Breite und Dicke mit einer hydrodynamischen Form, wobei ein jedes Blattprofil (5) mit dem oberen Teil seiner Welle (6) an einer drehenden, scheibenförmigen Tragkonstruktion (3) befestigt ist, die mit der Hauptwelle (2) der Turbine verbunden ist, und wobei die Längswellen (6) der Blattprofile (5) vorwiegend parallel zu der Hauptwelle (2) sind, **dadurch gekennzeichnet, dass** ein jedes Blattprofil (5) mit einem Schrittmotor (8) ausgerüstet ist, der für einzelnes Schwenken der Blattprofile (5) um ihre Längswelle (6) herum unabhängig von den anderen Blattprofilen (5) verwendet wird, um zu erreichen, dass sich die Hauptfläche eines jeden Blattprofils (5) in einem gewünschten Angriffswinkel in Bezug auf die und absolut zu der Richtung des strömenden Mediums (11) befindet.

2. Turbine nach Anspruch 1, **dadurch gekennzeichnet, dass** der Schrittmotor (8) als Hybridschrittmotor, als Plattenschrittmotor oder als gewöhnlicher Schrittmotor ausgeführt ist.

3. Turbine nach Anspruch 1 oder Anspruch 2, **dadurch gekennzeichnet, dass** das freie Ende (9) eines jeden Blattprofils mit einem flachen, parallelogrammförmigen Objekt (15) ausgerüstet ist, das sich in rechtwinkliger Lage zu der Längsachse des Blattprofils (5) befindet.

4. Turbine nach Anspruch 1 oder Anspruch 2, **dadurch gekennzeichnet, dass** das freie Ende (9) eines jeden Blattprofils mit einem torpedoförmigen Objekt (10) in einer rechtwinkligen Lage zu der Längsachse des Blattprofils (5) ausgerüstet ist.

5. Turbine nach Anspruch 1 oder Anspruch 2, **dadurch gekennzeichnet, dass** das freie Ende (9) eines jeden Blattprofils mit einem elliptischen Körper (14) in einer rechtwinkligen Lage zu der Längsachse des Blattprofils (5) ausgerüstet ist.

6. Turbine nach einem der Ansprüche 1 bis 5, **dadurch gekennzeichnet, dass** der Schrittmotor (8) in jedes Blattprofil (5) einzeln und mit individueller Leistung eingreift und von einer zentralen Einheit gesteuert wird.

7. Turbine nach einem der Ansprüche 1 bis 6, **dadurch gekennzeichnet, dass** das Blattprofil (5) und der Schrittmotor (8) auf einer scheibenförmigen Tragkonstruktion angerbacht sind.

8. Turbine nach einem der Ansprüche 1 bis 7, **dadurch gekennzeichnet, dass** sich die Drehwelle in einer vorwiegend senkrechten Stellung befindet.

9. Turbine nach einem der Ansprüche 1 bis 7, **dadurch gekennzeichnet, dass** sich die Drehwelle in einer vorwiegend waagerechten Stellung befindet.

10. Turbine nach einem der Ansprüche 1 bis 9, **dadurch gekennzeichnet, dass** das strömende Medium Wasser ist.

## Revendications

1. Turbine entraînée par un milieu fluidique afin de générer de l'électricité, comprenant un certain nombre de profils (5) de longueur, largeur et épaisseur appropriées, présentant une forme hydrodynamique, chaque profil (5) étant fixé par la partie supérieure de son axe (6) à une structure de support tournante discoïdale (3), raccordée à l'axe principal de la turbine (2), les axes longitudinaux (6) des profils (5) étant principalement parallèles à l'axe principal (2), **caractérisée en ce que** chaque profil (5) est équipé d'un moteur pas à pas (8) servant à faire individuellement pivoter le profil (5) autour de son axe longitudinal (6), de manière indépendante par rapport à chacun des autres profils (5), de façon à ce que la surface principale de chaque profil (5) puisse se trouver à un angle d'attaque désiré relatif et absolu en direction du milieu fluidique (11).

2. Turbine selon la revendication 1, **caractérisée en ce que** le moteur pas à pas (8) est du type moteur pas à pas hybride, pas à pas à plaque, ou pas à pas ordinaire.

3. Turbine selon l'une quelconque des revendications 1 ou 2, **caractérisée en ce que** l'extrémité libre (9) de chaque profil est équipée d'un objet plat en forme de parallélogramme (15), se trouvant dans une position perpendiculaire à l'axe longitudinal du profil (5).

4. Turbine selon l'une quelconque des revendications 1 ou 2, **caractérisée en ce que** l'extrémité libre (9) de chaque profil est équipée d'un objet en forme de torpille (10), se trouvant dans une position perpendiculaire à l'axe longitudinal du profil (5).

5. Turbine selon l'une quelconque des revendications 1 ou 2, **caractérisée en ce que** l'extrémité libre (9) de chaque profil est équipée d'un corps elliptique (14), se trouvant dans une position perpendiculaire à l'axe longitudinal du profil (5).

6. Turbine selon l'une quelconque des revendications 1 à 5, **caractérisée en ce que** le moteur pas à pas (8) est fait pour s'engager de manière individuelle avec chaque profil (5), et avec une alimentation individuelle, et pour être contrôlé par une unité centrale.

7. Turbine selon l'une quelconque des revendications 1 à 6, **caractérisée en ce que** le profil (5) et les moteurs pas à pas (8) sont montés sur une structure de support discoïdale.

8. Turbine selon l'une quelconque des revendications 1 à 7, **caractérisée en ce que** l'axe de rotation se trouve principalement en position verticale.

9. Turbine selon l'une quelconque des revendications 1 à 7, **caractérisée en ce que** l'axe de rotation se trouve principalement en position horizontale.

10. Turbine selon l'une quelconque des revendications 1 à 9, **caractérisée en ce que** le milieu fluidique est de l'eau.
